(19)

Europäisches Patentamt
European Patent Office
Office européen des brevets

(11) **EP 4 137 376 A1**

(12) **EUROPEAN PATENT APPLICATION**

(43) Date of publication:
**22.02.2023 Bulletin 2023/08**

(21) Application number: **21192429.5**

(22) Date of filing: **20.08.2021**

(51) International Patent Classification (IPC):
**B60W 20/10** (2016.01)   **B60W 20/15** (2016.01)
**B60W 20/16** (2016.01)   **B60W 30/188** (2012.01)
**B60L 15/20** (2006.01)   **B60W 50/00** (2006.01)
**B60W 10/06** (2006.01)   **B60W 10/08** (2006.01)
**B60W 10/26** (2006.01)

(52) Cooperative Patent Classification (CPC):
**B60W 20/10; B60L 15/2045; B60L 50/15;
B60W 20/11; B60W 20/15; B60W 20/16;
B60W 30/1882;** B60L 2220/42; B60L 2240/12;
B60L 2240/423; B60L 2260/46; B60W 10/06;
B60W 10/08; B60W 10/26; B60W 2050/0013;

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Ningbo Geely Automobile Research &
Development Co., Ltd.
Ningbo, Zhejiang 315336 (CN)**
• **Zhejiang Geely Holding Group Co., Ltd.
Hangzhou, Zhejiang 310051 (CN)**

(72) Inventors:
• **PETROVICH, Simon
44331 Lerum (SE)**
• **XU, Yu
41739 Göteborg (SE)**
• **ZHAO, Jianning
43167 Mölndal (SE)**

(74) Representative: **Zacco Sweden AB
P.O. Box 5581
Löjtnantsgatan 21
114 85 Stockholm (SE)**

(54) **A METHOD FOR ADAPTATIVE REAL-TIME OPTIMIZATION OF A POWER OR TORQUE SPLIT IN A VEHICLE**

(57)    A method for adaptive real-time optimization of a power or torque split in a vehicle having a first propulsion source (M1), a second propulsion source (M2) and a reinforcement-learning-based split controller for controlling a power or torque distribution between the first and second propulsion sources (M1, M2). The method comprises: initializing an optimal power or torque split matrix (S*) and a learning feedback variable ($\lambda$*) of the reinforcement-learning-based split controller; obtaining a vehicle power setpoint ($P_{SP}$) or torque setpoint ($TQ_{SP}$) from a vehicle driver or a vehicle autonomous driving system; calculating a first optimal power or torque setpoint ($P1_{SP}$, $T1_{SP}$) for the first propulsion source (M1) and a second optimal power or torque setpoint ($P2_{SP}$, $T2_{SP)}$ for the second propulsion source (M2) based on a power split value derived from optimal power or torque split matrix (S*) and the vehicle power setpoint ($P_{SP}$) or torque setpoint ($TQ_{SP}$); controlling the first propulsion source (M1) using the first optimal power or torque setpoint ($P1_{SP}$, $T1_{SP}$), and controlling the second propulsion source (M2) using the second optimal power or torque setpoint ($P2_{SP}$, $T2_{SP}$); using a machine learning algorithm of the reinforcement-learning-based split controller for calculating a learning feedback variable ($\lambda$) based on measured or estimated power or torque output feedback, wherein the learning feedback variable ($\lambda$) represents an optimization criteria; updating the optimal power or torque split matrix (S*) when the calculated learning feedback variable ($\lambda$) represents an improvement in terms of the optimization criteria over the previous learning feedback variable ($\lambda$*).

EP 4 137 376 A1

**(Cont. next page)**

FIG.4

(52) Cooperative Patent Classification (CPC): (Cont.)
     B60W 2050/0088

**Description**

TECHNICAL FIELD

The present disclosure relates to a method for adaptive real-time optimization of a power or torque split in a vehicle having a first propulsion source, a second propulsion source and a reinforcement-learning-based split controller for controlling a power or torque distribution between the first and second propulsion sources. The disclosure further relates to a corresponding vehicle power or torque management system.

The method and system according to the disclosure can be arranged in a car, but the method and system is not restricted to this particular vehicle, but may alternatively be installed or implemented in another type of vehicle, such as a truck, a bus, a rail vehicle, a flying vehicle, a marine vessel, an off-road vehicle, a working vehicle, or the like.

BACKGROUND

Hybrid electric vehicles (HEVs) and some Battery electric vehicles (BEV) have several torque or power sources in different architectures, which can be applied to the wheels to achieve traction. Hence, a design requirement is how to identify and apply a highly efficient power split between the various power sources. Criteria for optimality include for example emissions, fuel consumption, drivability, State of Charge (SOC) deviation, etc.

One known solution aiming at identifying a highly efficient power split on a known drive cycle involves applying so called Dynamic Programming (DP), which rely on knowing the drive cycle beforehand and determining an optimal or at least highly efficient power split for each drive moment by calculating backwards from the end point in the drive cycle, such that each discretized connecting step corresponds to an optimal or at least highly efficient power split. However, in real-world conditions, the actual drive cycle is typically not known beforehand, so the resulting performance may be sub-optimal and less useful.

Other solutions for obtaining an optimal or at least highly efficient power split involves applying control strategies such as Rule Based Strategy (RBS), Fuzzy Logic, Genetic Algorithms (GA).

However, none of the prior art solutions provide a control strategy that performs sufficiently well in terms of the targeted criteria, such as for example low fuel consumption, while being computational efficient to allow real-time implementation.

There is thus a need for an improved method for determining a power or torque split in a vehicle, which computational efficient to allow real-time implementation, and which does not require information of the actual drive cycle beforehand.

SUMMARY

An object of the present disclosure is to provide a method and system for adaptive real-time optimization of a power or torque split in a vehicle having two propulsion sources, where the previously mentioned problems are avoided. This object is at least partly achieved by the features of the independent claims.

According to a first aspect of the present disclosure, there is provided a method for adaptive real-time optimization of a power or torque split in a vehicle having a first propulsion source, a second propulsion source and a reinforcement-learning-based split controller for controlling a power or torque distribution between the first and second propulsion sources. The method comprises: initializing an optimal power or torque split matrix and a learning feedback variable of the reinforcement-learning-based split controller; obtaining a vehicle power setpoint or torque setpoint from a vehicle driver or a vehicle autonomous driving system; calculating a first optimal power or torque setpoint for the first propulsion source and a second optimal power or torque setpoint for the second propulsion source based on a power split value derived from optimal power or torque split matrix and the vehicle power setpoint or torque setpoint; controlling the first propulsion source using the first optimal power or torque setpoint, and controlling the second propulsion source using the second optimal power or torque setpoint; using a machine learning algorithm of the reinforcement-learning-based split controller for calculating a learning feedback variable based on measured or estimated power or torque output feedback, wherein the learning feedback variable represents an optimization criteria; and updating the optimal power or torque split matrix when the calculated learning feedback variable represents an improvement in terms of the optimization criteria over the previous learning feedback variable.

According to a second aspect of the present disclosure, there is provided a vehicle power or torque management system for adaptive real-time optimization a power or torque split in a vehicle having a first propulsion source, a second propulsion source and a reinforcement-learning-based split controller for controlling a power or torque distribution between the first and second propulsion sources. The power or torque split controller being configured for: initializing an optimal power or torque split matrix and a learning feedback variable; obtaining a vehicle power setpoint or torque setpoint from a vehicle driver or a vehicle autonomous driving system; calculating a first optimal power or torque setpoint for the first propulsion source and a second optimal power or torque setpoint for the second propulsion source based on a power split value derived from optimal power or torque split matrix and the vehicle power setpoint or torque setpoint; controlling the first propulsion source using the first optimal power or torque setpoint, and controlling the second propulsion source using the second optimal power or torque setpoint; using a machine learning algorithm for calculating a learning feedback variable based on measured or estimated power or torque output feedback, wherein the learning feedback variable represents an optimization criteria; and updating the optimal power or torque split matrix when the calculated learning feedback variable represents an improvement in terms of the optimization criteria over the previous learning feedback variable.

In this way, an improved method and system for determining a power or torque split in a vehicle is accomplished, in particular in terms of reduced computational requirement and allowing more cost-efficient real-time implementation. Furthermore, there is no information required about the actual drive cycle beforehand, and/or on development of a mathematical model of the vehicle system. Instead, the method and system, after having been properly initialized based on historical driving or similar training data, adapts automatically to gradual changes in system behavior.

In other words, the adaptive machine learning approach according to the disclosure, due to continuous update of the controller rules in real-time, enables the optimal, or at least near optimal, power split solution for each driving situation, given the current circumstances, despite that fact that the optimal split changes over vehicle lifetime due to many factors, for example, component wear and tear.

Further advantages are achieved by implementing one or several of the features of the dependent claims.

In some example embodiments, the step of calculating a first optimal power or torque setpoint for the first propulsion source based on any of the equations: $P1_{SP} = S^* \times P_{SP}$ or $P1_{SP} = S^* \times CorrFact \times P_{SP}$ or $P1_{SP} = P_{SP} \times f(S^*)$ or $P1_{SP} = P_{SP} \times f(S^*,AP)$ or $T1_{SP} = S^* \times T_{SP}$ or $T1_{SP} = S^* \times CorrFact \times T_{SP}$ or $T1_{SP} = T_{SP} \times f(S^*)$ or $T1_{SP} = T_{SP} \times f(S^*,AP)$, and calculating a second optimal power or torque setpoint for the second propulsion source based on the equation: $P2_{SP} = P_{SP} \times (1 - S^*)$ or $P2_{SP} = P_{SP} \times (1 - S^* \times CorrFact)$ or $P2_{SP} = P_{SP}(1 - f(S^*))$ or $P2_{SP} = P_{SP}(1 - f(S^*,AP))$ or $T2_{SP} = T_{SP} \times (1 - S^*)$ or $T2_{SP} = T_{SP} \times (1 - S^* \times CorrFact)$ or $T2_{SP} = T_{SP}(1 - f(S^*))$ or $T2_{SP} = T_{SP}(1 - f(S^*,AP))$.

In some example embodiments, the step of initializing the optimal power or torque split matrix involves loading the optimal power or torque split matrix with predetermined power or torque split values. Thereby, the vehicle power or torque management system is ready for use directly upon manufacturing.

In some example embodiments, that may be combined with any one or more of the above-described embodiments, the step of initializing the optimal power or torque split matrix involves defining a matrix Λ with a predetermined learning feedback performance variable $\Lambda = [\lambda_{VS,TQVS}]$. Thereby, the vehicle power or torque management system is ready for use directly upon manufacturing.

In some example embodiments, that may be combined with any one or more of the above-described embodiments, the step of determining whether to update the optimal power or torque split matrix involves, in case increased learning feedback variable represents an improvement of the current operating condition, e.g. system or vehicle efficiency,

$$IF\ \lambda > \lambda^*$$
$$THEN\ \Delta S = S - S^*$$
$$UPDATE\ S^* \rightarrow S^* + \Delta S$$

In some example embodiments, that may be combined with any one or more of the above-described embodiments, the step of determining whether to update the optimal power or torque split matrix involves, in case reduced learning feedback variable represents an improvement of the current operating condition, e.g. system or vehicle total energy consumption,

$$IF\ \lambda < \lambda^*$$
$$THEN\ \Delta S = S^* - S$$
$$UPDATE\ S^* \rightarrow S^* - \Delta S$$

Thereby, the system is computational efficient to allow real-time implementation.

In some example embodiments, that may be combined with any one or more of the above-described embodiments, the learning feedback variable is continuously updated and used for incremental updating of the optimal power split matrix.

In some example embodiments, that may be combined with any one or more of the above-described embodiments, the optimization criteria of the learning feedback variable is minimized total input power, or maximal total system efficiency, or minimized total emissions, or maximal driveability. By optimizing a total vehicle parameter, sub-optimization of a sub-system may be avoided, thereby enabling improved vehicle efficiency.

In some example embodiments, that may be combined with any one or more of the above-described embodiments, the first propulsion source is an electric motor and the second propulsion source is a combustion engine, and the learning feedback variable in form of minimized total input power is calculated based on the following equation:

$$P_{SP} = P_{ICE} + P_{EM} = \dot{m}_f * \frac{1}{BSFC} + V * I.$$

In some example embodiments, that may be combined with any one or more of the above-described embodiments, the first propulsion source is a first electric motor and the second propulsion source is a second electric motor, and the learning feedback variable in form of minimized total input power is calculated based on the following equation:

$$P_{SP} = P_{EM1} + P_{EM2} = V_{EM1} \times I_{EM1} + V_{EM2} \times I_{EM2}.$$

In some example embodiments, that may be combined with any one or more of the above-described embodiments, the first propulsion source is an electric motor and the second propulsion source is a combustion engine, and the learning feedback variable in form of minimized total input power is calculated based on the following equation: $P_{SP}=$

$W_{ICE}(SOC,AP) * P_{ICE} + W_{EM}(SOC,AP) * P_{EM} = W_{ICE}(SOC,AP) * \dot{m}_f * \frac{1}{BSFC} + W_{EM}(SOC,AP) * V * I$. The terms $W_{ICE}$ and $W_{EM}$ are here weightings as a function of SOC only, or SOC in combination with one or more Additional Parameters AP.

In some example embodiments, that may be combined with any one or more of the above-described embodiments, the first propulsion source is an electric motor and the second propulsion source is a combustion engine, and the learning feedback variable in form of maximized total vehicle efficiency is calculated based on the following equation: $\eta_{TOT} = \eta_{ICE} * \eta_{EM} * \eta_{Inverter} * \eta_{Trans}$.

In some example embodiments, that may be combined with any one or more of the above-described embodiments, the first propulsion source is a first electric motor and the second propulsion source is a second electric motor, and the learning feedback variable in form of minimized total input power is calculated based on the following equation: $P_{SP}= W_{EM1}(SOC,AP)P_{EM1} + W_{EM2}(SOC,AP)P_{EM2} = W_{EM1}(SOC,AP) \times V_{EM1} \times I_{EM1} + W_{EM2}(SOC,AP) \times V_{EM2} \times I_{EM2}$. The terms $W_{EM1}$ and $W_{EM2}$ are here weightings as a function of SOC only, or SOC in combination with one or more Additional Parameters AP.

In some example embodiments, that may be combined with any one or more of the above-described embodiments, the learning feedback variable in form of maximized total vehicle efficiency is calculated based on the following equation: $\eta_{TOT} = \eta_{EM1} \times \eta_{EM2} \times \eta_{Inverter1} \times \eta_{Inverter2} \times \eta_{Trans1} \times \eta_{Trans2}$.

In some example embodiments, that may be combined with any one or more of the above-described embodiments, the step of updating of the optimal power or torque split matrix is excluded during certain driving event, such as when shifting HEV driving mode or during gear changes. Thereby, updating of the optimal power or torque split matrix based on non-relevant operating conditions may be avoided.

In some example embodiments, that may be combined with any one or more of the above-described embodiments, the reinforcement-learning-based split controller uses at least vehicle speed and vehicle torque as parameters of the optimal power or torque split matrix $S^*_{VS,TQ}$ and learning feedback variable $\lambda_{VS,TQ}$. Vehicle speed and vehicle torque are two very relevant parameters for control of a vehicle drive train.

In some example embodiments, that may be combined with any one or more of the above-described embodiments, the reinforcement-learning-based split controller uses at least vehicle speed, vehicle torque and vehicle acceleration as parameters of the optimal power or torque split matrix $S^*_{VS,TQ,\dot{VS}}$ and learning feedback variable $\lambda_{VS,TQ,\dot{VS}}$. By including also vehicle acceleration as parameter for control of the vehicle drive train, further improved efficiency may be accomplished.

In some example embodiments, that may be combined with any one or more of the above-described embodiments, the optimal power split matrix specifies a set of power split values ranging between zero and one. This enables a computational-efficient approach for managing and updating the power split matrix.

In some example embodiments, that may be combined with any one or more of the above-described embodiments, the first propulsion source is an electric motor and the second propulsion source is a combustion engine.

In some example embodiments, that may be combined with any one or more of the above-described embodiments, both the first and second propulsion sources are electric motors.

In some example embodiments, that may be combined with any one or more of the above-described embodiments, vehicle speed setpoint, vehicle torque setpoint, and optionally also vehicle acceleration setpoint, are input parameters to the optimal power split matrix $S^*$, which determines an optimal power or torque setpoint of the first and second propulsion source, respectively.

In some example embodiments, that may be combined with any one or more of the above-described embodiments, the first and second optimal power or torque setpoints, respectively, as determined by the optimal power split matrix $S^*$, may be corrected to take at least one Additional Parameter into account, such as in particular battery state of charge, battery health status, ambient and/or battery temperature, ambient condition, driver identification. This correction of the first and second optimal power or torque setpoints, respectively, may for example be accomplished by determining a Correction Factor (CorrFact) based on one or more Additional Parameters, and subsequently multiplying an optimal power or torque split value, as derived from the optimal power or torque split matrix $S^*$, with said Correction Factor. Thereby, a more accurate and adaptable power or torque split system is accomplished.

Alternatively, the a corrected or modified power split value may be calculated by feeding the split value from the optimal power split matrix $S^*$ to a Correction Function CF, i.e. a mathematical function having a modified power split as output and the power split value and an Additional Parameter AP as input variables.

In this connection, the correction function may for example involve setting the output value to zero at low power split values, such as about 0 - at least 0.1, i.e. mainly ICE operating mode, irrespective of the power split value from the $S^*$ matrix. Similarly, the correction function may for example involve setting the output value to "1" at higher power split values, such as about 0.8 - 1.0, i.e. mainly EM operating mode, irrespective of the power split value from the $S^*$ matrix. Finally, the correction function may for example involve defining the output value to a mathematical function ranging from zero to one, when the split value is a centre region between zero and max.

In some example embodiments, that may be combined with any one or more of the above-described embodiments, at least one additional parameter, such as battery state of charge, battery health status, ambient and/or battery temperature, ambient condition, driver identification, is input parameter to the optimal power split matrix $S^*$, which determines the first and second optimal power or torque setpoints.

In some example embodiments, that may be combined with any one or more of the above-described embodiments, the machine learning algorithm substantially constantly obtains: measured and/or estimated vehicle output power or torque of each of the first and second propulsion motors; measured and/or estimated first error value reflecting a difference between the first optimal power or torque setpoint and vehicle output power or torque of the first propulsion motor; measured and/or estimated second error value reflecting a difference between the second optimal power or torque setpoint and vehicle output power or torque of the second propulsion motor; and measured or estimated vehicle speed, measured or estimated vehicle torque, and optionally also measured or estimated vehicle acceleration.

The disclosure also relates to a vehicle comprising the vehicle power or torque management system described above.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

BRIEF DESCRIPTION OF DRAWINGS

The method and system for adaptive real-time optimization of a power or torque split in a vehicle according to the disclosure will be described in detail in the following, with reference to the attached drawings, in which

Fig. 1-2      show schematically two alternative vehicle layouts suitable for implementation of the power or torque split according to the present disclosure,

Fig. 3      shows schematically the optimal power split matrix $S^*$,

Fig. 4-5      show schematically two alternative embodiments of the layout of the power or torque split system,

Fig. 6-8B      show schematically some additional example embodiments of a detailed layout of the power or torque split system,

Fig. 9      shows schematically input power as function of power split value,

Fig. 10A-C      show schematically an example embodiment of the content of a Correction Function,

Fig. 11-12      show schematically some additional example embodiments of a detailed layout of the power or torque split system,

Fig. 13-14      show schematically a data map for controlling the EM and ICE, respectively,

Fig. 15      shows schematically the content of the optimal power split matrix $S^*$,

Fig. 16      shows schematically the content of the learning feedback performance matrix $\Lambda$ - Based on Input Power, and

Fig. 17      shows schematically the basic steps of the method for optimising the vehicle power or torque split.

DESCRIPTION OF EXAMPLE EMBODIMENTS

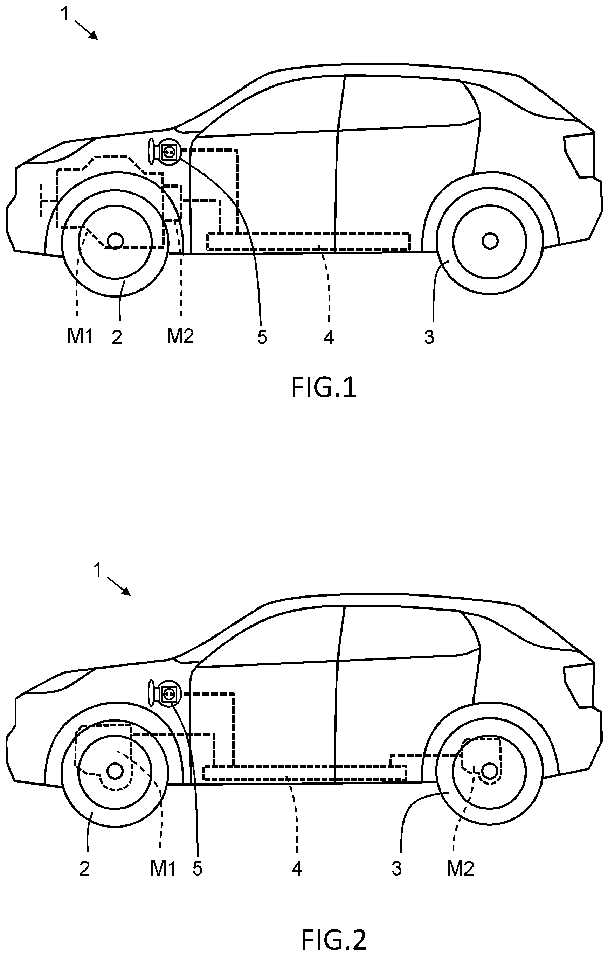

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.
Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.
With reference to figures 1 and 2, the present disclosure relates to method for optimising a power or torque split in a vehicle having a first propulsion source M1 and a second propulsion source M2, as well as corresponding vehicle power or torque management system.
The method and system may be implemented in a many different types of vehicle powertrains having at least two different propulsion sources. For example, with reference to figure 1, the method and system may be implemented in a hybrid electric vehicle (HEV) 1 having an Internal Combustion Engine (ICE) as first propulsion source M1 and an electric motor (EM) as second propulsion source M2. The ICE may for example be drivingly connected with the vehicle front wheels 2 and/or rear wheels 2 and the electric motor M2 may be integrated in the ICE and drivingly connected to an output shaft of the ICE, as schematically illustrated in figure 1. Alternatively, the ICE may be drivingly connected with the vehicle front wheels 2 and the electric motor M2 may be drivingly connected with the rear wheels 3, or oppositely.
With reference to figure 2, the method and system may alternatively be implemented in a battery electric vehicle (BEV) 1 having a first electric motor as first propulsion source M1 and a second electric motor as second propulsion source M2. The first electric motor M1 may be drivingly connected with the vehicle front wheels 2 and the second electric motor M2 may be drivingly connected with the rear wheels 3, as schematically illustrated in figure 2.
In the example embodiments described above, the vehicle additionally include a high-voltage propulsion battery 4 that is electrically connected with the electric motor(s) via suitable power converter(s), such as inverter or the like. The high-voltage propulsion battery 4 may be wired or wireless recharged from an external power source via a charging connector 5. Alternatively, the vehicle may lack charging connector 5 and battery charging is performed by vehicle internal power source, such as the ICE, fuel cell, solar panels, or the like.
Many further variations of the implementation of the first and second propulsions sources are possible and within the scope of the present disclosure. For example, an ICE may be drivingly connected to the front wheels 2 and one electric motor may be drivingly connected to each rear wheel 3 for enabling torque vectoring, or oppositely.

Machine Learning

A machine learning (ML) algorithm may typically be classified in one of three machine learning main classes, namely supervised, unsupervised and reinforcement learning.
According to some example embodiments of the present disclosure, the proposed algorithm incorporates both supervised machine learning, e.g. including a model that maps inputs to the target output, and reinforcement learning, i.e. learning via a feedback.
Vast amounts of algorithm training data can be made available during vehicle driving to build up a profile of the journeys, for example, in a cloud environment. This information can be classified according to various parameters, and reinforcement learning can be controlled to focus on certain system characteristic, e.g. $CO_2$, or emissions, or equivalent energy consumption.

Conventional product development for HEVs or BEVs typically includes component mapping of each propulsion source separately, such as for example mapping of the ICE for Brake Specific Fuel Consumption (BSFC) performance or mapping of the electric motor for efficiency. However, mapping at discrete parametrized operating points does not normally occur for the entire vehicle, i.e. on a vehicle level.

According to the present disclosure, an initial step for implementing the method for optimising a power or torque split in a vehicle having a first propulsion source M1 and a second propulsion source M2 involves an apriori vehicle mapping or calibration process for a parametrizing variable, such as for example $\lambda_{VS,TQ}$, wherein VS denotes vehicle speed and TQ denotes vehicle torque.

During the mapping process or through learning by driving of the vehicle, the optimal power split (or torque split, within a torque-based controller architecture) can be calculated. For example, this can be performed by a steady-state mapping on a chassis dynamometer or in simulation, in particular by first ensuring that only the first propulsion source M1 is used, and then gradually increase the power split between the first and second propulsion sources M1, M2 until only the second propulsion source M2 is used. This is valid apriori for steady state conditions and the parametrizing variable $\lambda_{VS,TQ}$ is used in the decision-making process to update a power split matrix $S_{VS,TQ}$

$$split = S_{VS,TQ} = \mathrm{f}(VS, TQ)$$

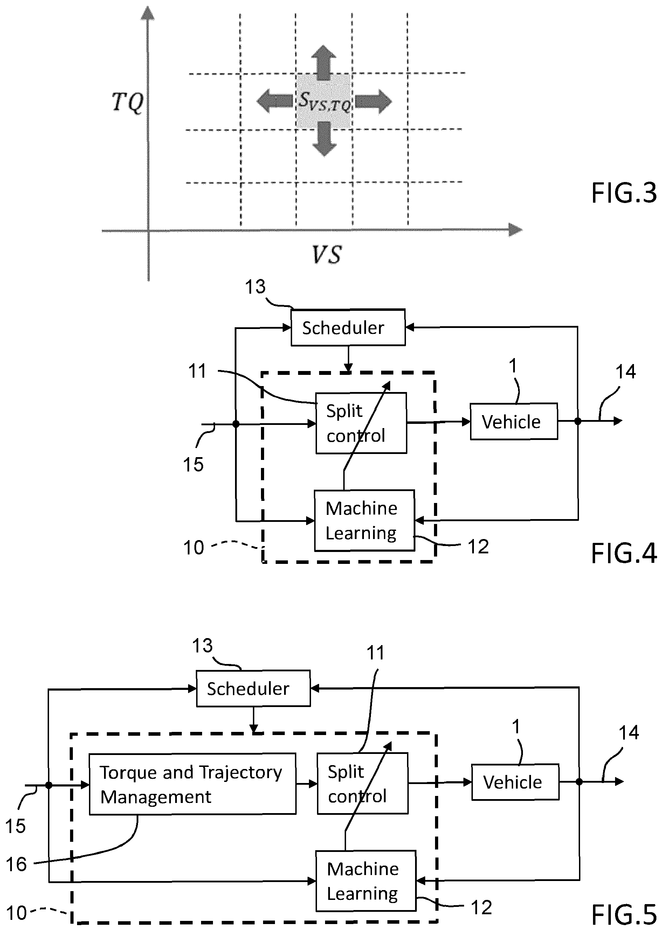

A steady state powersplit matrix $S_{VS,TQ}$ is schematically illustrated in figure 3.

A machine-learning algorithm can be used to parametrize the individual entries in the power split matrix $S_{VS,TQ}$.

The parametrizing variable $\lambda_{VS,TQ}$ can for example be vehicle efficiency, vehicle CO2 emission, vehicle exhaust emissions, for example. The parametrizing variable $\lambda_{VS,TQ}$ must generally be stored for online, i.e. real-time, calculations.

During dynamic conditions, the vehicle is moving and hence vehicle acceleration V, which represents a further degree of freedom, can be incorporated as a third dimension to the power split matrix $\mathbf{S}_{VS,TQ,\dot{VS}}$ to accommodate transients:

$$\mathbf{split} = \mathbf{S_{VS,TQ,\dot{VS}}} = \mathbf{f}(\mathbf{VS, TQ, \dot{VS}})$$

Let the optimal split be denoted $S^*_{VS,TQ,\dot{VS}}$.

In the real world, there are component tolerances in electric machines, actuators, sensors and combustion engines, etc., which mean that the optimal power split is not fixed, but varies with different vehicles and external conditions, as well as varying onboard power grid voltages and SOC, as well as the vehicle lifetime.

Hence, a continuous update mechanism is required for $S^*_{VS,TQ,\dot{VS}}$ based on certain rules for adapting the optimal power split matrix $S^*_{VS,TQ,\dot{VS}}$ to such vehicle condition. These updates can be performed by machine learning algorithms, which constantly monitor the drive patterns.

Increments can be confirmed and stored as adaptive maps, for example:

$$S^*_{VS,TQ,\dot{VS}} + \Delta S$$

where $\Delta S$ is the latest improvement based on the parametrizing variable $\lambda_{VS,TQ,\dot{VS}}$.

For example, if $\lambda_{VS,TQ,\dot{VS}}$ is the system or vehicle efficiency, then if there is an improvement at the current operating condition, $S^*_{VS,TQ,\dot{VS}}$ is updated, i.e.

$$IF\ \lambda_{VS,TQ,\dot{VS}} > \lambda^*_{VS,TQ,\dot{VS}}$$

$$THEN\ \Delta S = S_{VS,TQ,\dot{VS}} - S^*_{VS,TQ,\dot{VS}}$$

$$UPDATE\ S^* \to S^* + \Delta S$$

This essentially involves, in the example embodiment in which the parametrizing variable $\lambda_{VS,TQ,\dot{VS}}$ represents vehicle efficiency, comparing for a certain operating point the most recently calculated value of the parametrizing variable $\lambda_{VS,TQ,\dot{VS}}$ with the value of the previous parametrizing variable $\lambda^*_{VS,TQ,\dot{VS}}$, and subsequently updating the optimal torque split matrix $S^*$ when the value of the most recently calculated learning feedback variable $\lambda$, i.e. vehicle efficiency, is larger than the previous learning feedback variable $\lambda^*$. The updating is performed by setting a new value of the optimal power split matrix $S^*_{VS,TQ,\dot{VS}}$ equal to the value of the previous optimal power split matrix $S^*_{VS,TQ,\dot{VS}}$ plus $\Delta S$, wherein $\Delta S$ is the latest improvement based on the parametrizing variable $\lambda_{VS,TQ,\dot{VS}}$. In other words, the step: *UPDATE $S^* \rightarrow S^* + \Delta S$* corresponds to: *New $S^*$ = Old $S^*$ + $\Delta S$*

Note, a matrix of the most up-to-date learning feedback performance variable is required: $\Lambda = [\lambda_{VS,TQ,\dot{VS}}]$

This learning feedback performance matrix $\Lambda$ is stored during the apriori vehicle mapping or calibration process.

According to some example embodiments, implementation aspects may include a permitted maximum update $\Delta S_{max}$ and/or filtering to ensure smoothness of operation.

Furthermore, updating of the optimal power split matrix $S^*_{VS,TQ,\dot{VS}}$ may be excluded during certain transient operating conditions, such as when switching HEV modes or during gear changes, etc.

The machine learning is a continuous process and ensures the optimal split $S^*_{VS,TQ,\dot{VS}}$ over vehicle lifetime.

According to some example embodiments, the method and system may include different optimal split $S^*$ for different gears, fuels, and/or drivers, thereby enabling even better alignment of the optimal split to the specific operating condition.

Implementation

The implementation of the method and system for optimising a power or torque split in a vehicle having a first propulsion source M1 and a second propulsion source M2 according to the disclosure may be performed in various ways. For example, a schematic high-level view of an implementation having several different parts is illustrated in figure 4. This example layout of the implementation includes a vehicle controller 10 having a split regulator 11, a Machine Learning (ML) algorithm 12, and a Scheduler 13, which monitors the power or torque split regulator 11 and ML algorithm 12 and decides when to update the split regulator 11.

The output parameters of the split regulator 11, which are supplied to the first and second propulsion sources M1, M2 of the vehicle 1, respectively, may be for example a certain fuel mass flow rate to the ICE and certain current level and voltage level to the electrical motor. The output parameter 14 of the vehicle 1 may be propulsion power or torque supplied to the driving wheels. One input parameter 15 to the high-level vehicle system of figure 4 may for example be power or torque setpoint, i.e. a power or torque demand as provided by a person driving the vehicle 1 or by an autonomous driver controller.

The vehicle representation is here generic and includes for example HEV with an ICE and electrical motor as two independent propulsion sources M1, M2, or two electrical motors M1, M2, one for the vehicle front wheels and one for the vehicle rear wheels, or the like, with or without a transmission and/or a final drive ratio (FDR). Moreover, as described above, although the algorithm is explained in the context of a HEV architecture, it could be applied to other architectures with multiple torque sources M1, M2, such as for example a BEV (Battery Electric Vehicle) with front wheel drive and rear wheel drive, or a HEV plus rear e-axle (3 torque sources).

The scheduler 13 decides when to run the machine learning power split algorithm and can exclude certain operating modes like, such as for example regenerative braking operating mode ($P_{EM} < 0$), HEV operating mode shift, exhaust after treatment regeneration operating mode, gear change operating mode, or when the ICE is cold and has not yet reached normal operating temperature.

The machine learning algorithm (also known as reinforcement learning algorithm) constantly monitors the learning feedback $\lambda_{TQ,VS,\dot{VS}}$ and uses it to update the optimal split matrix $S^*$ when this is deemed necessary. The machine learning algorithm obtains for example estimates and/or measurements reflecting the power or torque output of the first and second propulsion sources M1, M2. For example, the machine learning algorithm may receive measured or estimated values of voltage and/or current being supplied to a propulsion source M1, M2 in the form of an electric motor. Similarly, the machine learning algorithm may receive measured or estimated values of fuel mass flow rate being supplied to the ICE.

Various types of machine learning techniques may be used for implementing the machine learning algorithm of the present disclosure. These machine learning techniques, as such, belong to conventional technology and are well-known to the person skilled in the art. For example, it is possible to use ANN (Artificial Neural Networks), SVR (Support Vector Machine), RFR (Random Forest), or GPR (Gaussian Process Regression) as machine learning technique when implementing the power or torque split method and system according to the present disclosure.

In order to distribute the correct power or torque setpoint to the electric motor (EM) and the ICE subsystem, there is a Split Control function. The split control function may optionally be adjusted for taking external factors into account when setting the power or torque setpoints to the EM and the ICE subsystem, such as for example ambient conditions (temperature, precipitation, wind, snow, road condition), battery SOC, current gear and/or driver identification.

The vehicle implements the power or torque setpoints, i.e. power demands, determined by the split regulator 11. The vehicle representation is generic and includes for example HEV with an ICE and electrical motor as two independent propulsion sources, or two electrical motors, one for the vehicle front wheels and one for the vehicle rear wheels, or the like, with or without a transmission and/or a final drive ratio (FDR).

Consequently, with reference to for example figure 4, the present disclosure describes a vehicle power management system for adaptive real-time optimization of a power split in a vehicle 1 having a first propulsion source M1, a second propulsion source M2 and a reinforcement-learning-based split controller 10 for controlling a power distribution between the first and second propulsion sources M1, M2. The split controller is configured for: initializing an optimal power split matrix $S^*$ and a learning feedback variable $\lambda^*$; obtaining a vehicle power setpoint $P_{SP}$ from a vehicle driver or a vehicle autonomous driving system; calculating a first optimal power setpoint $P1_{SP}$ for the first propulsion source M1 and a second optimal power setpoint $P2_{SP}$ for the second propulsion source M2 based on a power split value derived from optimal power split matrix $S^*$ and the vehicle power setpoint $P_{SP}$; controlling the first propulsion source M1 using the first optimal power setpoint $P1_{SP}$, and controlling the second propulsion source M2 using the second optimal power setpoint $P2_{SP}$; using a machine learning algorithm for calculating a learning feedback variable $\lambda$ based on measured or estimated power output feedback, wherein the learning feedback variable $\lambda$ represents an optimization criteria; and updating the optimal power split matrix $S^*$ when the calculated learning feedback variable $\lambda$ represents an improvement in terms of the optimization criteria over the previous learning feedback variable $\lambda^*$.

Specifically, the split controller may be configured for calculating a first optimal power setpoint $P1_{SP}$ for the first propulsion source M1 based on the equation $P1_{SP} = S^*P_{SP}$ [kW], and calculating a second optimal power setpoint $P2_{SP}$ for the second propulsion source M2 based on the equation: $P2_{SP} = P_{SP}(1 - S^*)$ [kW].

Furthermore, in implementations where the vehicle propulsion torque is used for vehicle propulsion control, the present disclosure describes a vehicle torque management system for adaptive real-time optimization of a torque split in a vehicle 1 having a first propulsion source M1, a second propulsion source M2 and a reinforcement-learning-based split controller 10 for controlling a torque distribution between the first and second propulsion sources M1, M2. The split controller is configured for: initializing an optimal torque split matrix $S^*$ and a learning feedback variable $\lambda^*$; obtaining a vehicle torque setpoint $TQ_{SP}$ from a vehicle driver or a vehicle autonomous driving system; calculating a first optimal torque setpoint $T1_{SP}$ for the first propulsion source M1 and a second optimal torque setpoint $T2_{SP}$ for the second propulsion source M2 based on a power split value derived from optimal torque split matrix $S^*$ and the vehicle torque setpoint $TQ_{SP}$; controlling the first propulsion source M1 using the first optimal torque setpoint $T1_{SP}$, and controlling the second propulsion source M2 using the second optimal torque setpoint $T2_{SP}$; using a machine learning algorithm for calculating a learning feedback variable $\lambda$ based on measured or estimated torque output feedback, wherein the learning feedback variable $\lambda$ represents an optimization criteria; and updating the optimal torque split matrix $S^*$ when the calculated learning feedback variable $\lambda$ represents an improvement in terms of the optimization criteria over the previous learning feedback variable $\lambda^*$.

Specifically, the split controller may be configured for calculating a first optimal torque setpoint $T1_{SP}$ for the first propulsion source M1 based on the equation $T1_{SP} = S^*T_{SP}$ [Nm], and calculating a second optimal torque setpoint $T2_{SP}$ for the second propulsion source M2 based on the equation: $T2_{SP} = T_{SP}(1 - S^*)$ [Nm].

The machine learning algorithm may thus be used for repeatedly, with a high iteration frequency, calculating the learning feedback variable $\lambda$, which is also referred to as the parametrizing variable, based on a measured or estimated power or torque output feedback, wherein the learning feedback variable $\lambda$ represents a power or torque split optimization criteria, such as for example total vehicle input power, total vehicle efficiency, vehicle fuel consumption, vehicle emissions, vehicle drivability, etc.

According to one example embodiment, an alternative schematic high-level view of an implementation is illustrated in figure 5. This specific example implementation further includes a torque and trajectory management part 16, which is configured to estimate a future trajectory of the vehicle 1, as well as the required propulsion power or torque a long said future trajectory. This may for example be accomplished based on past trajectories and torque demands and/or input data from an Advanced Driver Assistance System (ADAS) and/or from a vehicle controller of an Autonomous Vehicle (AV), or a combination thereof.

In other words, in some example embodiments, the trajectory can be estimated or determined apriori, i.e. beforehand, with a high probability. Driving route data, gathered from the same vehicle or same vehicle type, and representing many different travelling occasions of the same or a similar route, may be stored on a Cloud storage or the like and be readily available for the vehicle controller 10 when desired. As a result, torque or power setpoint trajectory can be calculated with high certainty based on this information, thereby enabling significantly improved power or torque split control

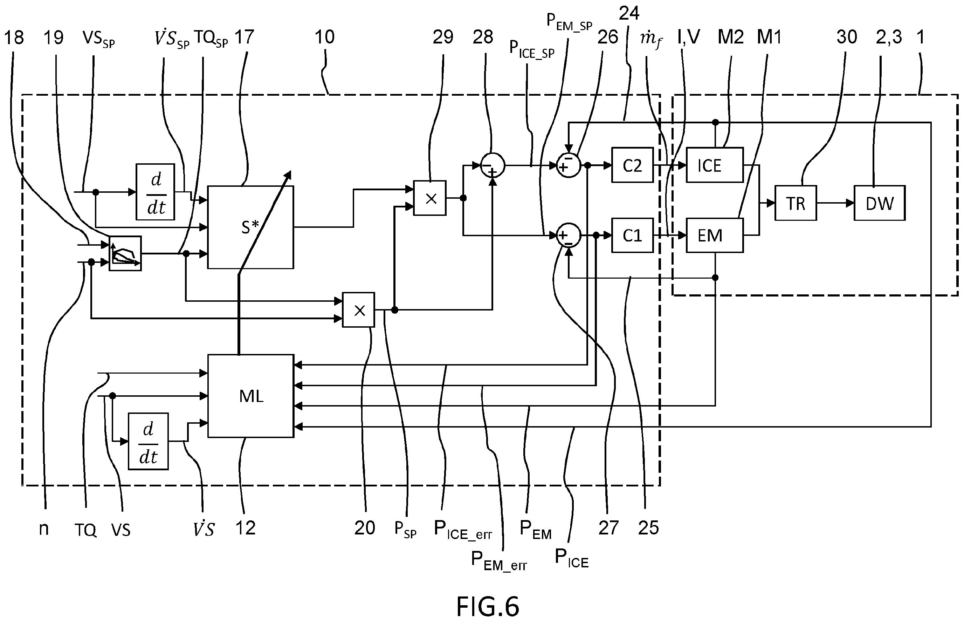

An example implementation layout of a more detailed version of the vehicle power or torque management system is schematically illustrated in figure 6, including the vehicle drivetrain 1, the vehicle controller 10 and the Machine Learning (ML) algorithm 12, but not showing the scheduler 13.

The vehicle controller 10 includes the optimal power split matrix $S^*_{VS,TQ,\dot{VS}}$ 17, which in this example embodiment calculates an optimal power split $S^*$ based on vehicle speed setpoint $VS_{SP}$, vehicle torque setpoint $TQ_{SP}$ and vehicle acceleration setpoint $\dot{VS}_{SP}$ as input parameters:

$$split = S^*_{VS,TQ,\dot{VS}} = f(VS, TQ, \dot{VS})$$

The vehicle speed setpoint $VS_{SP}$ may be derived from a route planner or by simply using the current vehicle speed, the vehicle acceleration setpoint $\dot{VS}_{SP}$ may be derived from the derivate of the vehicle speed setpoint $VS_{SP}$ with time. Moreover, the vehicle torque setpoint $TQ_{SP}$ may for example be derived from driver pedal position (0 - 100%) 18 in combination with engine speed n [rpm] according to $TQ_{SP}$ = f(pedal position, engine rotational speed). The vehicle torque setpoint $TQ_{SP}$ may for be example be stored in a two-dimensional lookup table 19 having pedal position 18 and engine speed n as input parameters.

The vehicle propulsion power setpoint $P_{SP}$[kW] may be calculated by multiplying vehicle torque setpoint $TQ_{SP}$ with engine speed n [rpm]. This is performed in product block 20 in figure 6.

Managing the power or torque distribution between the first and second propulsion sources M1, M2 involves continuously determining, in real-time, the fraction of the vehicle propulsion power setpoint $P_{SP}$ that should be routed and handled by the first propulsion source M1 and the fraction of the vehicle propulsion power setpoint $P_{SP}$ that should be routed and handled by the second propulsion source M2.

In the present example embodiment of figure 6, there are two propulsion sources, namely M1, which here is represented by an electric motor or electric machine EM, and M2, which here is represented by an ICE. The total vehicle propulsion power setpoint $P_{SP}$ should thus be distributed either only to one of the first or second propulsion source M1, M2, or be split between the first or second propulsion source M1, M2 with an appropriate split level, such as to provide two fractions.

The fractional EM part of the vehicle propulsion power setpoint $P_{SP}$ is derived from:

$$S_{VS,TQ,\dot{VS}} = f(VS, TQ, \dot{VS}) = \frac{P_{EM}}{P_{ICE} + P_{EM}} = \frac{P_{EM}}{P_{SP}}$$

$$= \begin{cases} 0 \; if \; P_{EM} = 0 \\ \in (0,1) \; if P_{ICE}, P_{EM} \neq 0 \\ 1 \; if \; P_{ICE} = 0 \end{cases}$$

The equation above may be rearranged as:

$$P_{EM} = \left(\frac{S}{1 - S}\right) P_{ICE}, \forall S \neq 1$$

In terms of vehicle propulsion power setpoint $P_{SP}$, the fractional EM part $P_{EM\_SP}$ of the vehicle propulsion power setpoint $P_{SP}$ may then be calculated by:

$$P_{EM\_SP} = S^* P_{SP}.$$

This corresponds to $P_{1\_SP} = S^* P_{SP}$, when the EM represents the first propulsion source M1.

Similarly, the fractional ICE part $P_{ICE\_SP}$ of the vehicle propulsion power setpoint $P_{SP}$ may then be calculated by:

$$P_{ICE\_SP} = P_{SP} - P_{EM_{SP}} = P_{SP} - S^* P_{SP} = P_{SP}(1 - S^*).$$

This corresponds to $P_{2\_SP} = (1 — S^*)P_{SP}$, when the ICE represents the second propulsion source M1.

In other words, considering that optimal power split matrix $S^*_{VS,TQ,\dot{VS}}$ 17 includes values in the range [0, 1], i.e. values between zero to one, reflecting the percentage of total power that should be provided by the first and second propulsion sources M1, M2, respectively, the optimal power split matrix $S^*_{VS,TQ,\dot{VS}}$ 17 provides, based on the current operating point as input, a scalar value ranging between 0 and 1, wherein $S^* = 0$ corresponds to passing 100% of the power setpoint $P_{SP}$ to a second controller C2 for controlling the ICE M2 to output 100% of the requested propulsion power, while a first controller C1 controls the electric motor M1 to output 0% of the requested propulsion power. In an opposite scenario, i.e. having $S^* = 1$, which corresponds to passing 100% of the power setpoint $P_{SP}$ to the first controller C1 for controlling the electric motor M1 to output 100% of the requested propulsion power, while the second controller C2 controls the ICE M2 to output 0% of the requested propulsion power. When $0 < S^* < 1$ both the ICE and electric motor output a certain percentage of the power setpoint $P_{SP}$.

In the layout according to the example embodiment of figure 6, the optimal power setpoint $P_{EM\_SP}$ for the EM is calculated in product block 29 based on the equation: $P_{EM\_SP} = S^* P_{SP}$. Hence, given the specific operating condition, the most appropriate power split value provided by the optimal power split matrix $S^*$ is supplied as input to product block 29, and the current power setpoint $P_{SP}$ is also supplied as input to product block 29, and the output of product block 29 is the optimal EM power setpoint $P_{EM\_SP}$, which is supplied as input to the first controller C1.

Similarly, the optimal power setpoint $P_{ICE\_SP}$ for the ICE is calculated by subtracting the the output of product block 29, i.e. $S^* P_{SP}$, from the current power setpoint $P_{SP}$ in subtraction block 28 based on the equation $P_{ICE\_SP} = P_{SP}(1 - S^*) = P_{SP} - S^* P_{SP}$. The output of subtraction block 28 is the optimal ICE power setpoint $P_{ICE\_SP}$, which is supplied as input to the second controller C2.

In the example embodiment of figure 6, the first controller C1 and EM are part of a first feedback control loop 25, the second controller C2 and ICE are part of a second feedback control loop 24. Thereby, errors in the first and second controllers C1, C2 and/or the ICE or EM may be automatically corrected.

The first feedback control loop 25 obtains measured or estimated output power $P_{EM}$ from the EM as feedback signal and this is sent to a first comparator 27. The first comparator 27 also receives the EM power setpoint $P_{EM\_SP}$, and the output signal of the first comparator 27 corresponds to an error signal $P_{EM\_err}$ of the EM output power, i.e. corresponding to how much the actual EM output power $P_{EM}$ differs from the desired EM power setpoint $P_{EM\_SP}$. This error signal $P_{EM\_err}$ is subsequently supplied to the first controller C1, which outputs an appropriate control signal to the EM, such as for example an appropriate current level and voltage level.

Similarly, the second feedback control loop 24 obtains measured or estimated output power $P_{ICE}$ from the ICE as feedback signal and this is sent to a second comparator 26. The second comparator 26 also receives the ICE power setpoint $P_{ICE\_SP}$, and the output signal of the second comparator 26 corresponds to an error signal $P_{ICE\_err}$ of the ICE output power, i.e. corresponding to how much the actual ICE output power $P_{ICE}$ differs from the desired ICE power setpoint $P_{ICE\_SP}$. This error signal $P_{ICE\_err}$ is subsequently supplied to the second controller C2, which outputs an appropriate control signal to the ICE, such as for example an appropriate fuel mass flow rate $\dot{m}_f$ to the ICE.

The propulsion torque generated by the EM and/or the ICE, i.e. the first and second propulsion sources M1, M2, is routed to the vehicle driving wheels 2, 3 via suitable drive train equipment, such as one or more drive shafts, and optionally one or more transmissions units 30

The machine learning algorithm 12 constantly monitors the drive patterns of the vehicle 1 and keeps the learning feedback performance variable matrix $\Lambda = [\lambda_{VS,TQ,\dot{VS}}]$ updated (parametrizing variable $\lambda_{VS,TQ,\dot{VS}}$).

This is performed by supplying online, i.e. in real-time, estimations or measurements of certain vehicle parameters to the ML algorithm 12. In the example embodiment of figure 6, the following vehicle parameters are supplied to the ML algorithm 12: measured or estimated vehicle speed VS, measured, estimated or calculated vehicle acceleration $\dot{V}$, measured or estimated vehicle torque TQ, measured or estimated power $P_{ICE}$ generated by ICE, measured or estimated power $P_{EM}$ generated by EM, the error signal $P_{ICE\_err}$ of the ICE output power, and the error signal $P_{EM\_err}$ of the EM output power. These input parameters to the ML algorithm 12 are measured or estimated values and not setpoints.

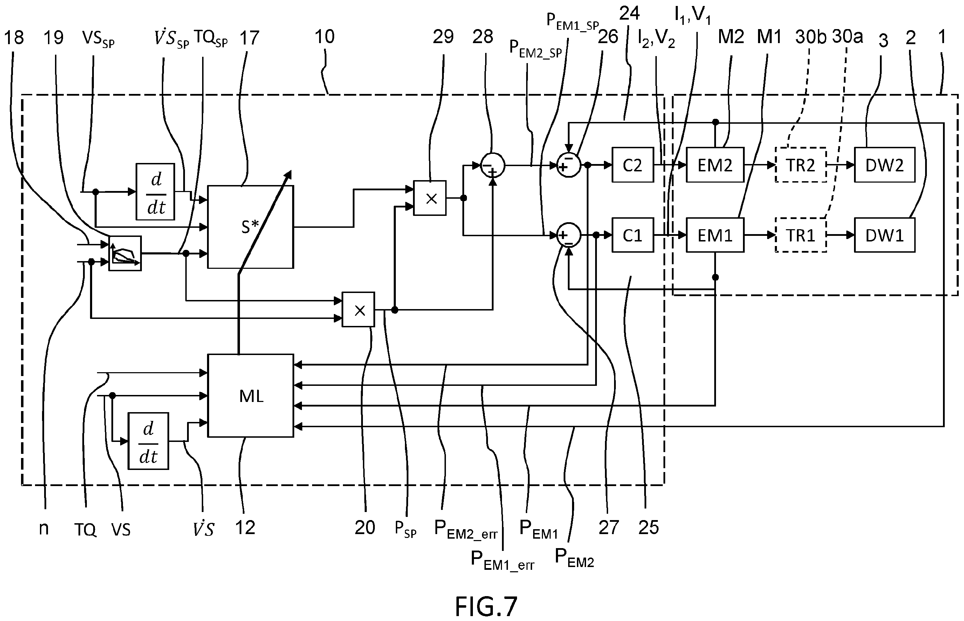

As mentioned above, the method and system for determining an optimal power split may be implemented in several different vehicle powertrain architectures. For example, one alternative powertrain architecture is schematically illustrated in figure 7, wherein the first and second propulsion sources M1, M2 corresponds to a first and second electric motor EM1, EM2. This may for example represent a conventional BEV having front axle electric propulsion motor M1 drivingly connected with front driving wheels 2 via an optional individual front transmission 30a, and a rear axle electric propulsion motor M2 drivingly connected with rear driving wheels 3 via an optional individual rear transmission 30b.

The optimal power split method and system according to the disclosure may be advantageous also in vehicle powertrain architectures having first and second electric motors EM1, EM2 as propulsion sources, because the electric motors EM1, EM2 may be of different types, have different rated performance, have different operating characteristics, be connected to driving wheels 2, 3 via different FDR, and/or be exposed to different ambient conditions, such as thermal conditions. In other words, the continuously changing driving conditions may be continuously mapped to a specific optimal power split between the first and second electric motor EM1, EM2 in view of a certain criteria, such as maximal total energy efficiency, minimal total power input, etc.

The other parts of the power management structure and layout of figure 7 may have the same or corresponding arrangement and configuration as those described above with reference to figure 6 and will not be repeated here.

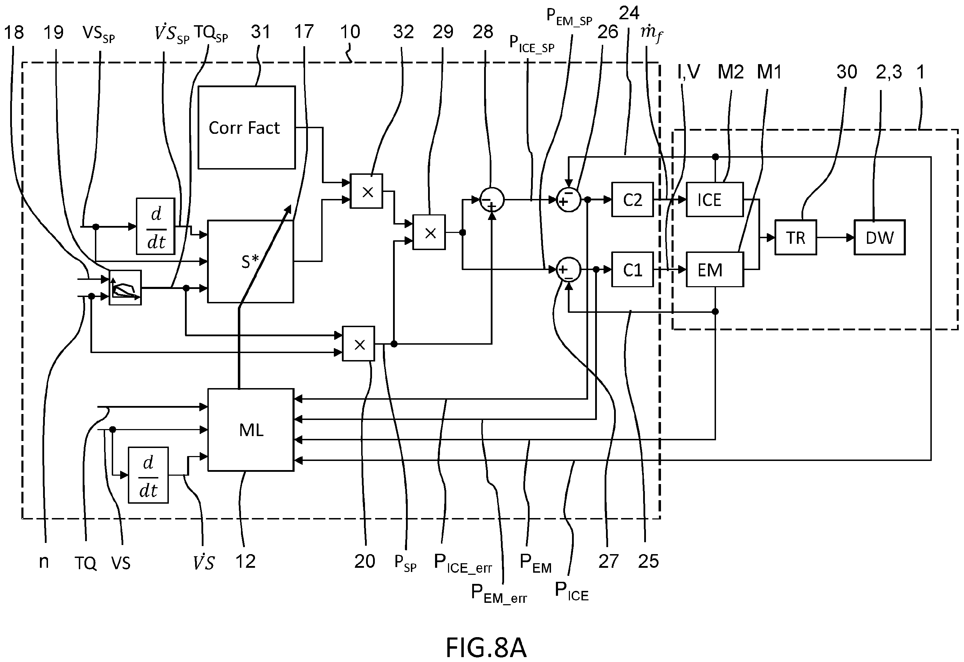

Figure 8A schematically shows still a further alternative powertrain or power management architecture, which compared with the power management system described with reference to figure 6 differs merely in the addition of one or more correction factors (CorrFact) 31. The correction factor(s) 31 is determined based on one or more external factors that may be taken into account when determining the optimal power or torque split. In other words, the optimal power or torque split value derivable from the optimal power split matrix $S^*$ may be corrected or adjusted for taking Additional Parameters (AP) into account when determining the final the power or torque setpoints to the first and second propulsion sources M1, M2, which Additional Parameters were not taken into account when calculating the optimal power or torque split value. These additional parameters may for example be ambient conditions, e.g. air temperature, precipitation, wind, snow, road condition, steering angle, etc., or battery SOC, or currently used FDR and/or driver identification, etc. All these aspects may more or less influence the optimality resulting from the power split matrix $S^*$, and may thus be used for correcting the power split.

In the schematic layout of figure 8A, the modified power split may be calculated by multiplying the optimal torque split value resulting from the optimal power split matrix $S^*$ with the correction factor(s) 31 in product block 32 in figure 8A. The modified power split value is subsequently supplied to in product block 29, as described above with reference to figure 6. Consequently, the optimal EM power setpoint $P_{EM\_SP}$, which is provided as output of product block 29, is based on the equation: $P_{EM\,SP} = S^* \times CorrFact \times P_{SP}$, wherein "CorrFact" is the correction factor.

Similarly, the optimal power setpoint $P_{ICE\_SP}$ for the ICE is calculated by subtracting the the output of product block 29, i.e.: $S^* \times CorrFact \times P_{SP}$, from the current power setpoint $P_{SP}$ in subtraction block 28 based on the equation $P_{ICE\_SP} = P_{SP}(1 - S^* \times CorrFact) = P_{SP} - S^* \times CorrFact \times P_{SP}$. The output of subtraction block 28 is the optimal ICE power setpoint $P_{ICE\_SP}$, which is supplied as input to the second controller C2.

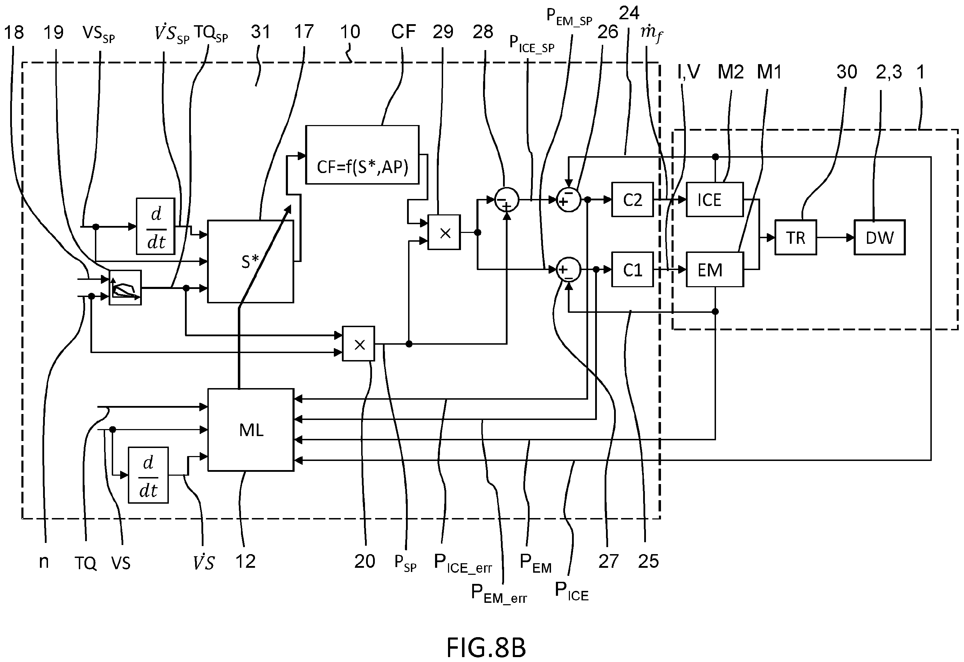

With reference to figure 8B, which is identical with figure 8A except for having the correction factor(s) 31 and subsequent product block 32 replaced with a Correction Function (CF) having one or more variables. In other words, the correction of the power split value is not necessarily limited to having a real number or a scalar being multiplied with the power split value resulting from the optimal power split matrix $S^*$. Instead, the correction of the power split value may be accomplished in a more flexible manner by means of applying a mathematical function having at least one variable, such as for example SOC or SOC and power split value, etc. Moreover, the Correction Function CF may still more alternatively be defined in terms of a piecewise-defined mathematical function, i.e. a function defined by multiple sub-functions, where each sub-function is applied to a different interval in a domain, such as in particular a different interval of the split value resulting from the optimal power split matrix $S^*$. The Correction Function CF may thus for example be a function or piecewise-defined mathematical function of certain variables, such as for example the resulting power split value, i.e. CF=f(S*), or the resulting power split value and one or more Additional Parameters, such as for example SOC, e.g. CF=f(S*, AP), etc.

The output value of the Correction Function would then always be a value between 0 - 1, thereby indicating the percentage of the power to be routed to the EM.

Consequently, the optimal EM power setpoint $P_{EM\_SP}$, which is provided as output of product block 29 in figure 8B, is based on the equation: $P_{EM\,SP} = P_{SP} \times f(S^*)$, or $P_{EM\,SP} = P_{SP} \times f(S^*,AP)$, or the like, wherein the Additional Parameter AP may be for example any of ambient conditions, e.g. air temperature, precipitation, wind, snow, road condition, steering angle, etc., or battery SOC, or currently used FDR and/or driver identification, etc.

Similarly, the optimal power setpoint $P_{ICE\_SP}$ for the ICE is calculated by subtracting the the output of product block 29, i.e.: $P_{SP} \times f(S^*)$ from the current power setpoint $P_{SP}$ in subtraction block 28 may be based on the equation $P_{ICE\_SP} = P_{Sp}(1 - f(S^*)) = P_{SP} - P_{SP} \times f(S^*)$, $P_{ICE\_SP} = P_{SP}(1 - f(S^*,AP)) = P_{SP} - P_{SP} \times f(S^*,AP)$, or the like, depending on what type of Additional Parameters are taken into account.

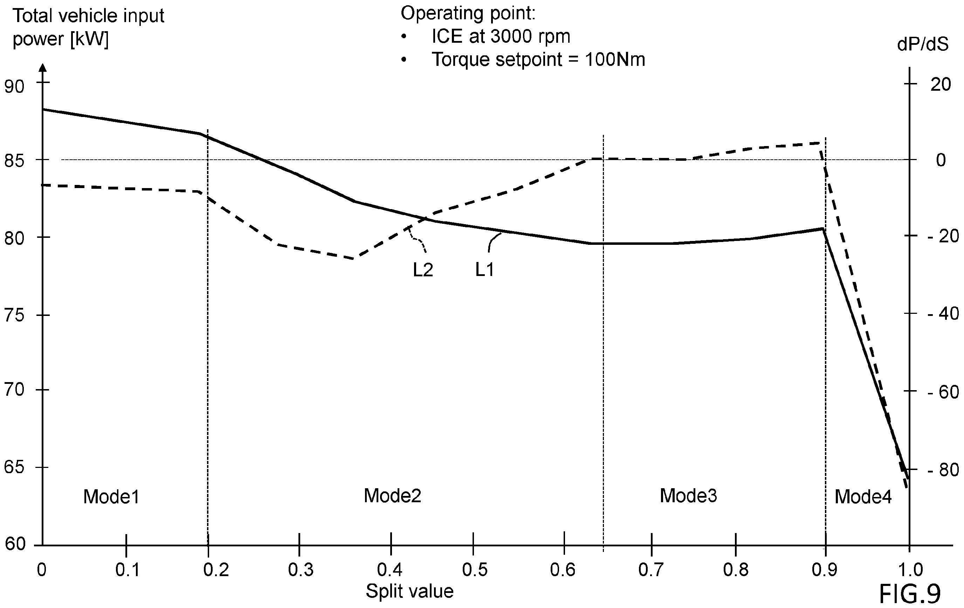

One example approach for determining a Correction Factor or a Correction Function may be to analyse for example how the total vehicle input power varies as a function of power split value. For example, the solid line L1 in figure 9 illustrates how the total vehicle input power required for producing 100 Nm vehicle propulsion torque at ICE speed of 3000 rpm various as a function the split value for a certain setup of a EM as first propulsion motor M1 and ICE as second propulsion motor M2.

At split value "0", which corresponds to pure ICE propulsion, figure 9 shows that the total input power is about 87 kW. Similarly, at split value "1", which corresponds to pure EM propulsion, the total input power is about 65 kW. The significant lower input power at pure EM propulsion is a result of the significantly higher operating efficiency of the EM over the ICE. Split values about "0" but below "1" correspond to mixed operation, i.e. simultaneous propulsion operation of the ICE and EM.

One approach for identifying the greatest benefit of increased power split value, in terms of reduced total power input, is to analyse the derivative of the total input power curve L1. The derivative of the solid line L1, which corresponds to the "total vehicle input power" as a function power split value, is a measure of the rate at which the value of the input power changes with respect to a change of the variable "power split value". This derivate, which may be denoted $\frac{dP}{dS}$ with P=input power and S=split value, is also plotted in figure 9 with a dotted line marked L2.

In the split value range of >0 to about 0.2, which is denoted "Mode1" in figure 9, the derivate is slightly negative and gradually sinking. This indicates a gradually increased benefit, i.e. gradually increased reduction of input power, with increased power split value.

In the split value range of about 0.2 to 0.65, which is denoted "Mode2" in figure 9, the derivate is first gradually sinking to an even more negative value and reaches a maximal negative value at about split value 0.35. Thereafter, derivative is gradually increasing and reaches about zero at power split value of about 0.65. This indicates a gradually further increased benefit, i.e. gradually increased reduction of input power, with increased power split value, in the range of about 0.2 to 0.35, and subsequently a gradually reduced benefit, i.e. gradually reduced reduction of input power, with increased power split value, in the range of about 0.35 to 0.65.

In the split value range of about 0.65 to 0.9, which is denoted "Mode3" in figure 9, the derivate is stable at about zero before becoming slightly positive in the range of 0.75 to 0.9. This indicates a constant benefit on the input power with increased power split value, in the range of about 0.65 to 0.75, and subsequently even a positive derivate of dP/dS in the range of 0.75 - 0.9. In other words, the increase in power split in Mode3 does actually not result in decreased vehicle input power. On the contrary, an increase in power split value even results in increased total input power above split value 0.75. One reason for this behaviour may be that ICE's in general have a relatively low operating efficiency in low load conditions, which results from a high power split value.

In the split value range of about 0.9 to 1.0, which is denoted "Mode4" in figure 9, the input power decreases significantly when the amount of pure electric propulsion increases, and the derivate sinks correspondingly.

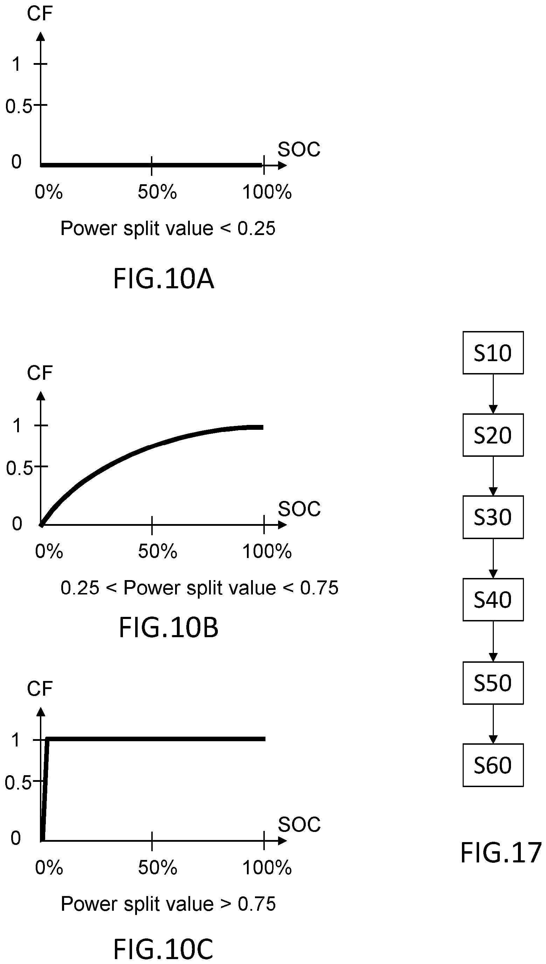

The analysis of the total input power curve L1 and its derivative curve L2 may be used for defining a vehicle power efficient or vehicle fuel efficient Correction Function. One example embodiment of the Correction Function is schematically described below with reference to figures 10A-C, which shows the output of the Correction Function as a function of both SOC and power split value as derived from the optimal power split matrix S$^*$.

Specifically, as illustrated in figure 10A, the output of the Correction Function may be set to zero for all values of SOC, when the power split value is below 0.25, because the benefit of a small power split, i.e. a small contribution from the EM, is relatively small. Having an output = 0 from the Correction Function means that the vehicle is powered by ICE only, irrespective of output of the optimal power split matrix S$^*$.

Moreover, as illustrated in figure 10B, the output of the Correction Function may be a continuous linear or non-linear function having "0" for 0% SOC and "1" for 100% SOC, when the power split value is between 0.25 - 0.75, because this an operating area with relatively large benefit of EM power.

Moreover, as illustrated in figure 10C, the output of the Correction Function may be an essentially constant "1", i.e. pure electric drive irrespective of SOC value, when the power split value is above about 0.75, because operation of the ICE in low load regions is generally highly inefficient and may preferably be avoided.

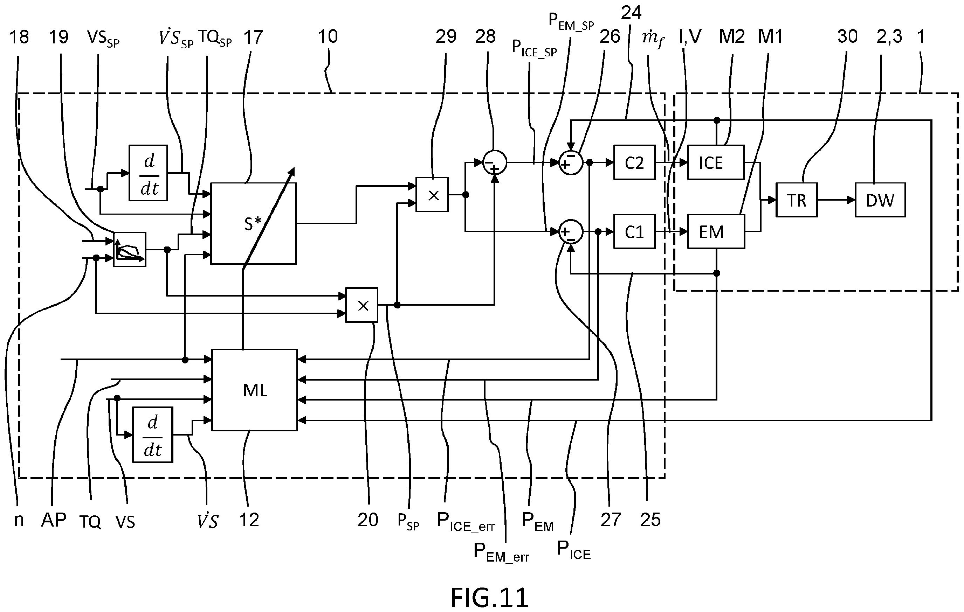

Figure 11 schematically shows still a further alternative powertrain or power management architecture, which compared with the power management system described with reference to figures 8A-B merely differs in terms of how to implement the Additional Parameter(s) AP into the power split management.

In the schematic layout of figure 11, the Additional Parameter(s) AP are instead included directly in the calibration mapping process for the optimal split matrix $S^*$. In other words, the Additional Parameter are supplied as input parameters for calculating the optimal power split using the power split matrix S$^*$, thereby eliminating the need to correct the calculated power split value thereafter, as performed in the example embodiments of figures 8A-B. Hence, in the example embodiment of figure 11, the optimal split matrix may additionally for example includes SOC, such that

$$S^*_{VS,TQ,\dot{VS},SOC} = f(VS,\ TQ,\ \dot{VS}, SOC)$$.

The Additional Parameter(s) are also supplied to the machine learning algorithm 12 for enabling continuous updating of the learning feedback performance variable matrix. In other words, when SOC is an Additional Parameter, the matrix of the most up-to-date learning feedback performance variable corresponds to: $\Lambda = [\lambda_{VS,TQ,\dot{VS},\ SOC}]$.

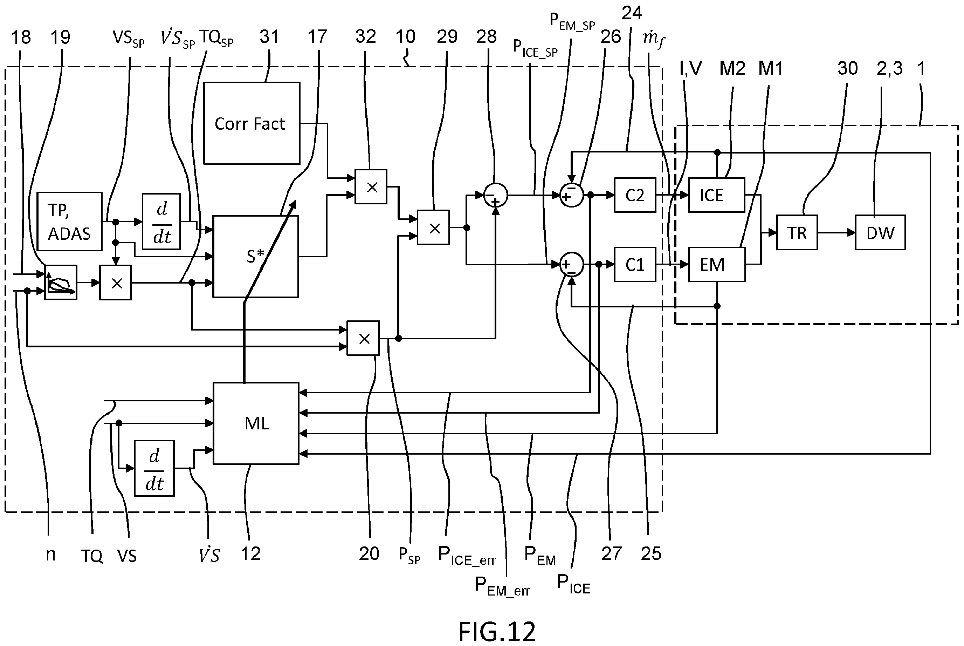

Figure 12 schematically shows still a further alternative powertrain or power management architecture, which compared with the power management system described with reference to figure 8A differs in terms of how vehicle speed setpoint VS$_{SP}$ and/or vehicle torque setpoint TQ$_{SP}$ is determined. Specifically, a trajectory planner TP and/or an advanced Driver Assistance System ADAS may be used as complementary information source for providing an estimate of the current and future speed setpoint and power/torque setpoint.

Specifically, the TP may have may have access to an onboard data storage, and/or a Cloud storage, having historical driving route data, gathered from the same vehicle or same vehicle type, or the specific driver, and representing many different travelling occasions of the same or a similar route. As a result, the TP may provide reliable estimates, for example by means of a route prediction algorithm, of the current and future vehicle speed setpoint, vehicle torque setpoint or power setpoint, thereby enabling significantly improved power split calculation.

For all various example embodiments described herein, either vehicle torque or vehicle power can be used as input parameter for the optimal power split matrix S$^*$.

The learning feedback variable for the machine learning algorithm may be selected depending on the specific circumstance of each individual implementation.

One example for learning feedback is total input power, which should be minimized. In this case, the vehicle power setpoint P$_{SP}$ may be derived from:

$$P_{SP} = P_{ICE} + P_{HEV} = \dot{m}_f * \frac{1}{BSFC} + V * I$$

The parameters of the learning feedback may thus be the sum of mechanical power ($\dot{m}_f$, fuelling) and electrical power (voltage V and current I supplied to electric motor).

Without loss of generality, in order to ensure feasible values also when only the EV mode is used, which will deplete the battery, weighting functions (W) need to be used, which could be a function of SOC, such as for example:

$$P_{SP} = W_{ICE}(SOC, ...)P_{ICE} + W_{HEV}(SOC, ...)P_{HEV}$$

According to another example, the learning feedback total vehicle efficiency, which should be maximized.

The parameters of the leaning feedback may derived from the following equation:

$$\eta_{TOT} = \eta_{ICE} * \eta_{EM} * \eta_{Inverter} * \eta_{Trans}$$

Where $\eta_{TOT}$ corresponds to total efficiency, $\eta_{ICE}$ corresponds to ICE efficiency, $\eta_{Inverter}$ corresponds to power inverter efficiency, and $\eta_{Trans}$ corresponds to transmssion effiency. In other words, the product of the product of efficiencies from power source to the wheels, encompasses ICE, HEV e-machine, inverter and transmission.

Other options for learning feedback parameter could be vehicle total emissions, vehicle drivability, etc.

Furthermore, in addition the disclosure above, the optimal power split matrix $S^*$ may include an additional parameter in form vehicle lateral acceleration, which is both a performance factor and a stability constraint. In other words, the optimal split matrix S* is determined based also vehicle lateral acceleration as input parameter.

The various example embodiments of the power or torque split system described above with reference to figures 6 — 8B and 11 — 12 all show the system layout in terms of power split, but the various layouts of figures 6 — 8B and 11 — 12 may alternatively be used for implementing the torque split system instead by merely feeding the torque setpoint $TQ_{SP}$ to the product block 29 and subtraction block 28, and supplying torque output $T_{ICE}$ and $T_{EM}$, as well as ICE torque output error signal $T_{ICE\_err}$ and EM torque error signal $T_{EM\_err}$ as input to the ML algorithm.

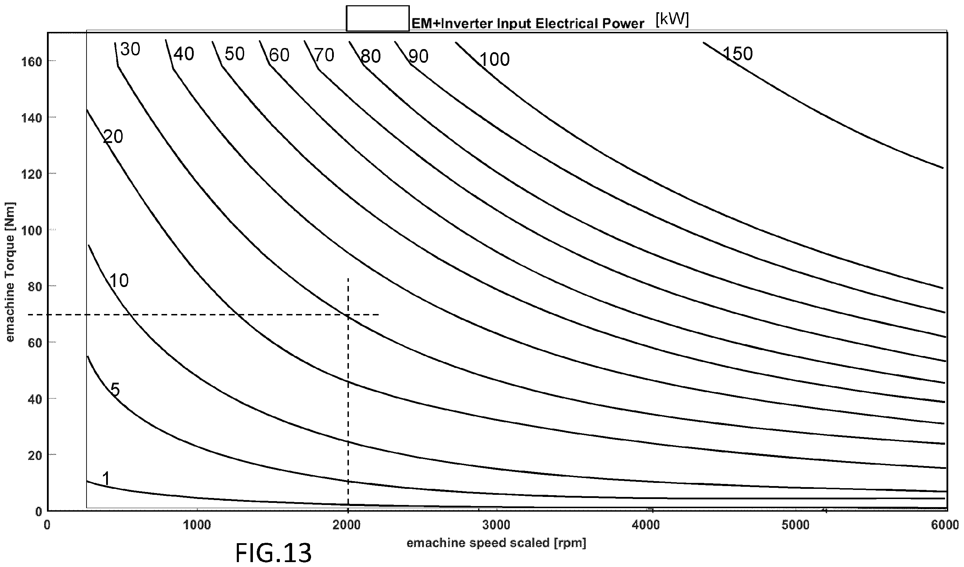

The diagram of figure 13 shows an example embodiment of a data table showing the required input electrical power [kW] required for generating a certain output torque [Nm] at a certain operating speed [rpm] of the electrical machine. For example, if the vehicle power or torque management system requests 70 Nm output torque at an operating speed of the EM of 2000 rpm, the controller of the electric machine may provide an input electrical power of 30 kW to the EM.

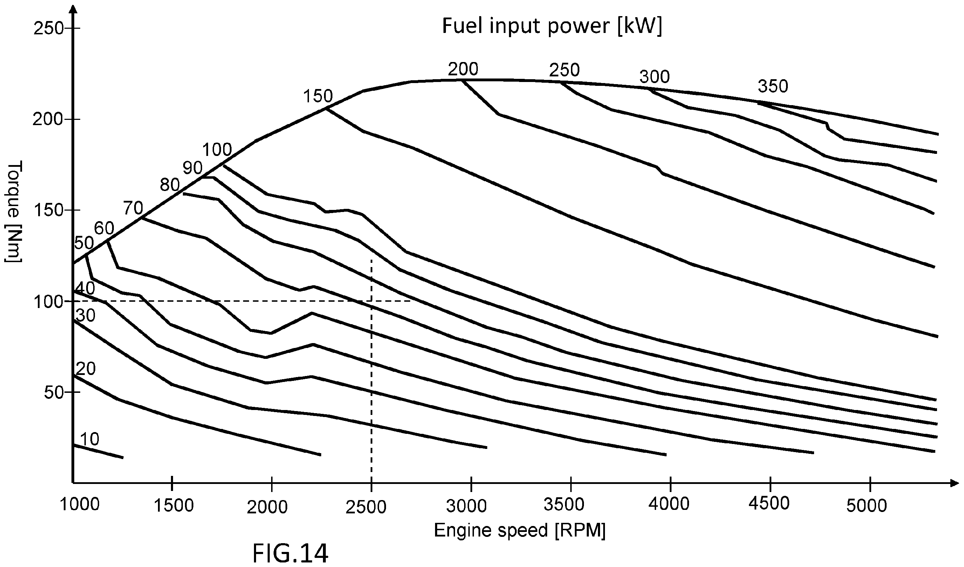

The diagram of figure 14 shows an example embodiment of a data table showing the required fuel input power [kW] required for generating a certain output torque [Nm] at a certain operating speed [rpm] of the ICE. For example, if the vehicle power or torque management system requests 100 Nm output torque at an operating speed of the ICE of 2500 rpm, the controller of the ICE may provide a fuel input power of 70 kW to the ICE.

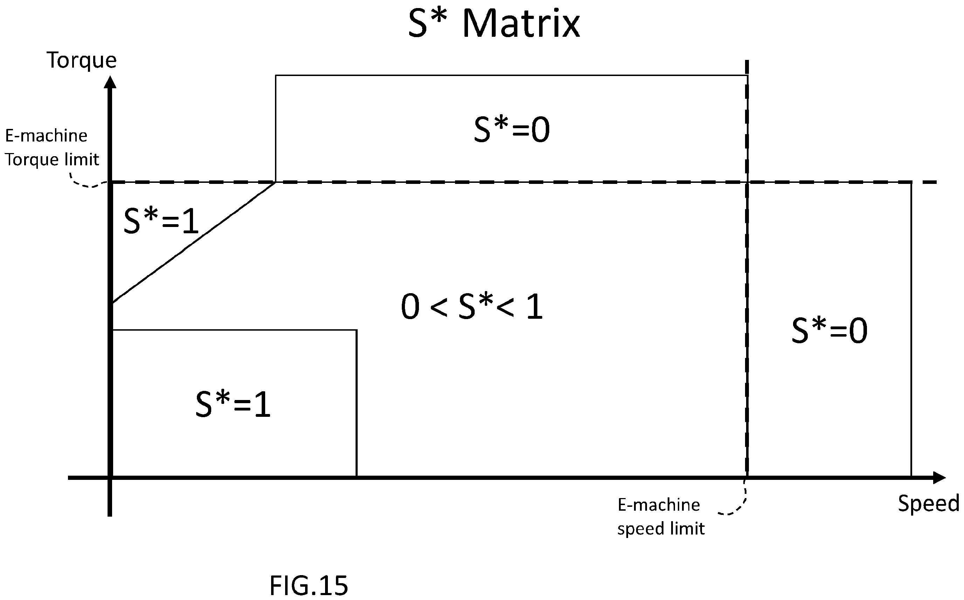

Figure 15 schematically shows an example embodiment of the content of the optimal power split matrix $S^*$. In this example embodiment, the optimal power split matrix has merely torque and speed as input variables, i.e. $S^*_{VS,TQ}$, and the matrix defines values ranging from [0, 1], i.e. values between zero to one. In the example of figure 15, the value is 1 is certain operating regions, in particular in low speed operating regions where the high torque of the EM may be exploited. However, in certain high speed or high torque operating regions, the value may be zero, indicating operation based solely using the ICE. In an operating region between these extreme conditions, the value of S* ranges between values larger than 0 but less than 1, thereby indicating a blending region having a combined operation of the ICE and EM.

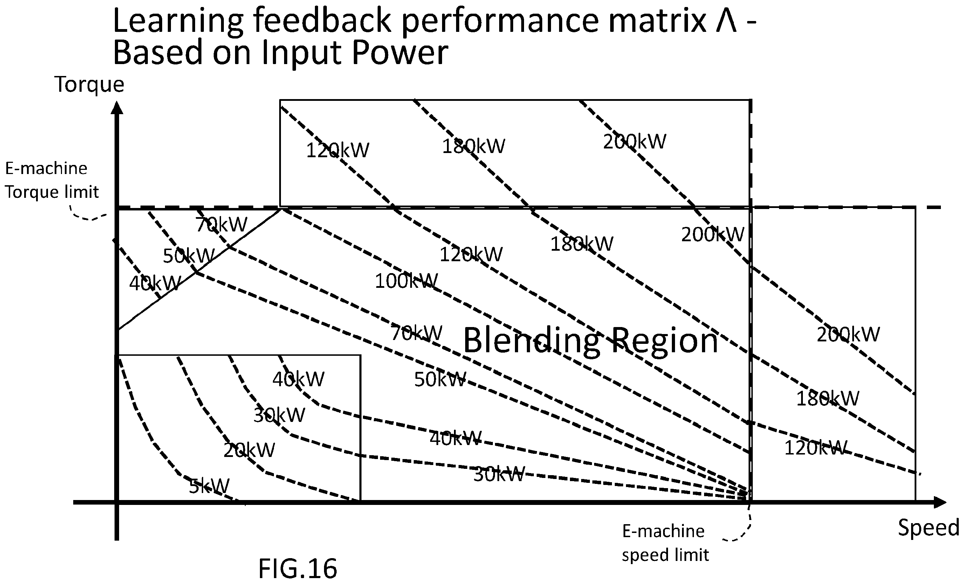

Figure 16 schematically shows the content of a corresponding learning feedback performance matrix $\Lambda$ based on input power.

The main steps of a method for adaptive real-time optimization of a power split in a vehicle having a first propulsion source M1, a second propulsion source M2 and a reinforcement-learning-based split controller for controlling a power distribution between the first and second propulsion sources M1, M2 is described below with reference to figure 17.

The method comprises a first step S10 of initializing an optimal power split matrix S* and a learning feedback variable $\lambda^*$ of the reinforcement-learning-based split controller. The method further comprises a second step S20 of obtaining a vehicle power setpoint $P_{SP}$ from a vehicle driver or a vehicle autonomous driving system. The method additionally comprises a third step S30 of calculating a first optimal power setpoint $P1_{SP}$ for the first propulsion source M1 and a second optimal power setpoint $P2_{SP}$ for the second propulsion source M2 based on a power split value derived from optimal power split matrix S*and the vehicle power setpoint $P_{SP}$. Furthermore, the method comprises a fourth step S40 of controlling the first propulsion source M1 using the first optimal power setpoint $P1_{SP}$ and controlling the second propulsion source M2 using the second optimal power setpoint $P2_{SP}$. Moreover, the method comprises a fifth step S50 of using a machine learning algorithm of the reinforcement-learning-based split controller for calculating a learning feedback variable $\lambda$ based on measured or estimated power output feedback, wherein the learning feedback variable $\lambda$ represents an optimization criteria, as well as a sixth step S60 of updating the optimal power split matrix $S^*$ when the calculated learning feedback variable $\lambda$ represents an improvement in terms of the optimization critera over the previous learning feedback variable $\lambda^*$.

The third step S30 of calculating a first optimal power setpoint $P1_{SP}$ for the first propulsion source M1 may for example be performed based on any of the equations: $P1_{SP} = S^* \times P_{SP}$ or $P1_{SP} = S^* \times CorrFact \times P_{SP}$ or $P1_{SP} = P_{SP} \times f(S^*)$ or $P1_{SP} = P_{SP} \times f(S^*,AP)$, and calculating a second optimal power setpoint $P2_{SP}$ for the second propulsion source M2 may for example be performed based on any of the equations: $P2_{SP} = P_{SP} \times (1 - S^*)$ or $P2_{SP} = P_{SP} \times (1 - S^* \times CorrFact)$ or $P2_{SP} = P_{SP}(1 - f(S^*))$ or $P2_{SP} = P_{SP}(1 - f(S^*,AP))$.

Furthermore, in implementations where the vehicle propulsion torque is used for vehicle propulsion control, the main steps of a method for adaptive real-time optimization of a torque split in a vehicle having a first propulsion source M1, a second propulsion source M2 and a reinforcement-learning-based split controller for controlling a torque distribution between the first and second propulsion sources M1, M2 is described below with reference to figure 17.

The method comprises a first step S10 of initializing an optimal torque split matrix $S^*$ and a learning feedback variable $\lambda^*$ of the reinforcement-learning-based split controller. The method further comprises a second step S20 of obtaining a vehicle torque setpoint $TQ_{SP}$ from a vehicle driver or a vehicle autonomous driving system. The method additionally comprises a third step S30 of calculating a first optimal torque setpoint $T1_{SP}$ for the first propulsion source M1 and a second optimal torque setpoint $T2_{SP}$ for the second propulsion source M2 based on a power split value derived from optimal torque split matrix $S^*$ and the vehicle torque setpoint ($TQ_{SP}$). Furthermore, the method comprises a fourth step S40 of controlling the first propulsion source M1 using the first optimal torque setpoint $T1_{SP}$, and controlling the second propulsion source M2 using the second optimal torque setpoint $T2_{SP}$. Moreover, the method comprises a fifth step S50 of using a machine learning algorithm of the reinforcement-learning-based split controller for calculating a learning feedback variable $\lambda$ based on measured or estimated torque output feedback, wherein the learning feedback variable $\lambda$ represents an optimization criteria, as well as a sixth step S60 of updating the optimal torque split matrix $S^*$ when the calculated learning feedback variable $\lambda$ represents an improvement in terms of the optimization criteria over the previous learning feedback variable $\lambda^*$.

The third step S30 of calculating a first optimal torque setpoint $T1_{SP}$ for the first propulsion source M1 may for example be performed based on any of the equations: $T1_{SP} = S^* \times T_{SP}$ or $T1_{SP} = S^* \times CorrFact \times T_{SP}$, or $T1_{SP} = T_{SP} \times f(S^*)$ or $T1_{SP} = T_{SP} \times f(S^*,AP)$ , and calculating the second optimal torque setpoint $T2_{SP}$ for the second propulsion source M2 may for example be performed based on any of the equations: $T2_{SP} = T_{SP} \times (1 - S^*)$ or $T2_{SP} = T_{SP} \times (1 - S^* \times CorrFact)$ or $T2_{SP} = T_{SP}(1 - f(S^*))$ or $T2_{SP} = T_{SP}(1 - f(S^*,AP))$.

The term "optimal" in "optimal power or torque split matrix S*" means herein the most optimal power or torque split based on the current available information, while also taking into account the limitations resulting from applying the above-described method. Hence, the term "optimal" should not necessarily be interpreted as a true optimal value but more the most optimal value available based on the used method.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of the vehicle power or torque management system, the one or more programs comprising instructions for performing the method according to any one of the above-discussed embodiments. Alternatively, according to another exemplary embodiment a cloud computing system can be configured to perform any of the method aspects presented herein. The cloud computing system may comprise distributed cloud computing resources that jointly perform the method aspects presented herein under control of one or more computer program products. Moreover, the processor may be connected to one or more communication interfaces and/or sensor interfaces for receiving and/transmitting data with external entities such as e.g. sensors arranged on the vehicle surface, an off-site server, or a cloud-based server.

The processor(s) associated with the vehicle power or torque management system may be or include any number of hardware components for conducting data or signal processing or for executing computer code stored in memory. The system may have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

Glossary

| | |
|---|---|
| ADAS | Advanced Driver Assistance System |
| AV | Autonomous Vehicle |
| BEV | Battery Electric Vehicle |
| BSFC | Brake Specific Fuel Consumption |
| FDR | Final Drive Ratio |
| HEV | Hybrid Electric Vehicle |
| ICE | Internal Combustion Engine |
| EM | Electric motor |
| ML | Machine Learning |
| SOC | State of Charge |
| $\dot{m}f$ | Fuel mass flow rate |
| CorrFact | Correction Factor |
| CF | Correction Function |
| SP | Setpoint |
| TQ | Torque |
| VS | Vehicle speed |
| VS | Vehicle acceleration |
| AP | Additional Parameter |

**Claims**

1. A method for adaptive real-time optimization of a power or torque split in a vehicle having a first propulsion source (M1), a second propulsion source (M2) and a reinforcement-learning-based split controller for controlling a power or torque distribution between the first and second propulsion sources (M1, M2), the method comprises:

   - initializing an optimal power or torque split matrix ($S^*$) and a learning feedback variable ($\lambda^*$) of the reinforcement-learning-based split controller,
   - obtaining a vehicle power setpoint ($P_{SP}$) or torque setpoint ($TQ_{SP}$) from a vehicle driver or a vehicle autonomous driving system;
   - calculating a first optimal power or torque setpoint ($P1_{SP}$, $T1_{SP}$) for the first propulsion source (M1) and a second optimal power or torque setpoint ($P2_{SP}$, $T2_{SP}$) for the second propulsion source (M2) based on a power split value derived from optimal power or torque split matrix ($S^*$) and the vehicle power setpoint ($P_{SP}$) or torque setpoint ($TQ_{SP}$),
   - controlling the first propulsion source (M1) using the first optimal power or torque setpoint ($P1_{SP}$, $T1_{SP}$), and controlling the second propulsion source (M2) using the second optimal power or torque setpoint ($P2_{SP}$, $T2_{SP}$),
   - using a machine learning algorithm of the reinforcement-learning-based split controller for calculating a learning feedback variable ($\lambda$) based on measured or estimated power or torque output feedback, wherein the learning feedback variable ($\lambda$) represents an optimization criteria,
   - updating the optimal power or torque split matrix ($S^*$) when the calculated learning feedback variable ($\lambda$) represents an improvement in terms of the optimization criteria over the previous learning feedback variable ($\lambda^*$).

2. The method according to claim 1, wherein the step of initializing the optimal power or torque split matrix (S*) involves loading the optimal power or torque split matrix (S*) with predetermined power or torque split values.

3. The method according to any of the preceding claims, wherein the step of initializing the optimal power or torque split matrix (S*) involves defining a matrix Λ with a predetermined learning feedback performance variable Λ = $[\lambda_{VS,TQ,\dot{VS}}]$.

4. The method according to any of the preceding claims, wherein the step of determining whether to update the optimal power or torque split matrix (S*) involves:

in case increased learning feedback variable ($\lambda$*) represents an improvement of the current operating condition, e.g. system or vehicle efficiency,

$$IF\ \lambda > \lambda^*$$
$$THEN\ \Delta S = S - S^*$$
$$UPDATE\ S^* \rightarrow S^* + \Delta S$$

or in case reduced learning feedback variable ($\lambda$*) represents an improvement of the current operating condition, e.g. system or vehicle total energy consumption,

$$IF\ \lambda < \lambda^*$$
$$THEN\ \Delta S = S^* - S$$
$$UPDATE\ S^* \rightarrow S^* - \Delta S$$

5. The method according to any of the preceding claims, wherein the learning feedback variable ($\lambda$) is continuously updated and used for incremental updating of the optimal power split matrix (S*).

6. The method according to any of the preceding claims, wherein the optimization criteria of the learning feedback variable ($\lambda$) is minimized total input power, or maximal total system efficiency, or minimized total emissions, or maximal driveability.

7. The method according to any of the preceding claims,

wherein the first propulsion source (M1) is an electric motor (EM) and the second propulsion source (M2) is a combustion engine (ICE), and the learning feedback variable ($\lambda$) in form of minimized total input power is calculated based on the following equation:

$$P_{SP} = P_{ICE} + P_{EM} = \dot{m}_f * \frac{1}{BSFC} + V * I,$$

or,
wherein the first propulsion source (M1) is a first electric motor (EM1) and the second propulsion source (M2) is a second electric motor (EM2), and the learning feedback variable ($\lambda$) in form of minimized total input power is calculated based on the following equation:

$$P_{SP} = P_{EM1} + P_{EM2} = V_{EM1} \times I_{EM1} + V_{EM2} \times I_{EM2}.$$

8. The method according to any of the preceding claims,

wherein the first propulsion source (M1) is an electric motor (EM) and the second propulsion source (M2) is a combustion engine (ICE), and wherein the learning feedback variable ($\lambda$) in form of minimized total input power is calculated based on the following equation: $P_{SP} = W_{ICE}(SOC,AP)P_{ICE} +$

$$W_{EM}(SOC,AP)P_{EM} = W_{ICE}(SOC,AP) * \dot{m}_f * \frac{1}{BSFC} + W_{EM}(SOC,AP) * V * I$$ , or wherein the learning feedback variable ($\lambda$) in form of maximized total vehicle efficiency is calculated based on the following equation: $\eta_{TOT} = \eta_{ICE} * \eta_{EM} * \eta_{Inverter} * \eta_{Trans}$, or

wherein the first propulsion source (M1) is a first electric motor (EM1) and the second propulsion source (M2) is a second electric motor (EM2), and wherein the learning feedback variable ($\lambda$) in form of minimized total input power is calculated based on the following equation: $P_{SP} = W_{EM1}(SOC,AP)P_{EM1} + W_{EM2}(SOC,AP)P_{EM2} = W_{EM1}(SOC,AP) \times V_{EM1} \times I_{EM1} + W_{EM2}(SOC,AP) \times V_{EM2} \times I_{EM2}$, or wherein the learning feedback variable ($\lambda$) in form of maximized total vehicle efficiency is calculated based on the following equation: $\eta_{TOT} = \eta_{EM1} \times \eta_{EM2} \times \eta_{Inverter1} \times \eta_{Inverter2} \times \eta_{Trans1} \times \eta_{Trans2}$.

9. The method according to any of the preceding claims, wherein updating of the optimal power or torque split matrix ($S^*$) is excluded during a certain driving event, such as for example when shifting HEV driving mode or during gear changes.

10. The method according to any of the preceding claims,

   wherein the reinforcement-learning-based split controller uses at least vehicle speed (VS) and vehicle torque (TQ) as parameters of the optimal power or torque split matrix $S^*_{VS,TQ}$ and learning feedback variable $\lambda_{VS,TQ}$, or
   wherein the reinforcement-learning-based split controller uses at least vehicle speed (VS), vehicle torque (TQ) and vehicle acceleration ($\dot{VS}$) as parameters of the optimal power or torque split matrix $S^*_{VS,TQ,\dot{VS}}$ and learning feedback variable $\lambda_{VS,TQ,\dot{VS}}$.

11. The method according to any of the preceding claims, wherein the optimal power split matrix ($S^*$) specifies a set of power split values ranging between zero and one.

12. The method according to any of the preceding claims,

   wherein the first propulsion source (M1) is an electric motor and the second propulsion source (M2) is a combustion engine, or
   wherein both the first and second propulsion sources (M1, M2) are electric motors.

13. The method according to any of the preceding claims,

   wherein the first and second optimal power or torque setpoints (P1$_{SP}$, T1$_{SP}$, P2$_{SP}$, T2$_{SP}$),respectively, as determined by the optimal power split matrix $S^*$, may be corrected to take at least one Additional Parameter into account, such as in particular battery state of charge, battery health status, ambient and/or battery temperature, ambient condition, driver identification, or
   wherein at least one Additional Parameter, such as battery state of charge, battery health status, ambient and/or battery temperature, ambient condition, driver identification, is input parameter to the optimal power split matrix ($S^*$), which determines the first and second optimal power or torque setpoints.

14. The method according to any of the preceding claims, wherein the machine learning algorithm substantially constantly obtains:

   measured and/or estimated vehicle output power or torque of each of the first and second propulsion motors (M1, M2),
   measured and/or estimated first error value reflecting a difference between the first optimal power or torque setpoint and vehicle output power or torque of the first propulsion motor (M1),
   measured and/or estimated second error value reflecting a difference between the second optimal power or torque setpoint and vehicle output power or torque of the second propulsion motor (M2), and
   measured or estimated vehicle speed, measured or estimated vehicle torque, and optionally also measured or estimated vehicle acceleration.

15. A vehicle power or torque management system for adaptive real-time optimization of a power or torque split in a vehicle having a first propulsion source, a second propulsion source (M2) and a reinforcement-learning-based split controller for controlling a power or torque distribution between the first and second propulsion sources (M1, M2), the split controller being configured for:

- initializing an optimal power or torque split matrix ($S^*$) and a learning feedback variable ($\lambda^*$),
- obtaining a vehicle power setpoint ($P_{SP}$) or torque setpoint ($TQ_{SP}$) from a vehicle driver or a vehicle autonomous driving system,
- calculating a first optimal power or torque setpoint ($P1_{SP}$, $T1_{SP}$) for the first propulsion source (M1) and a second optimal power or torque setpoint ($P2_{SP}$, $T2_{SP}$) for the second propulsion source (M2) based on a power split value derived from optimal power or torque split matrix ($S^*$) and the vehicle power setpoint ($P_{SP}$) or torque setpoint ($TQ_{SP}$),
- controlling the first propulsion source (M1) using the first optimal power or torque setpoint ($P1_{SP}$, $T1_{SP}$), and controlling the second propulsion source (M2) using the second optimal power or torque setpoint ($P2_{SP}$, $T2_{SP}$),
- using a machine learning algorithm for calculating a learning feedback variable ($\lambda$) based on measured or estimated power or torque output feedback, wherein the learning feedback variable ($\lambda$) represents an optimization criteria,
- updating the optimal power or torque split matrix ($S^*$) when the calculated learning feedback variable ($\lambda$) represents an improvement in terms of the optimization criteria over the previous learning feedback variable ($\lambda^*$).

FIG.1

FIG.2

FIG.3

FIG.4

FIG.5

FIG.6

EP 4 137 376 A1

FIG.7

EP 4 137 376 A1

FIG.8A

FIG.8B

FIG.9

CF

1

0.5

0

SOC

0%    50%    100%

Power split value < 0.25

FIG.10A

CF

1

0.5

0

SOC

0%    50%    100%

0.25 < Power split value < 0.75

FIG.10B

CF

1

0.5

0

SOC

0%    50%    100%

Power split value > 0.75

FIG.10C

S10

S20

S30

S40

S50

S60

FIG.17

FIG.11

FIG.12

FIG.13

FIG.14

S* Matrix

FIG.15

EP 4 137 376 A1

# Learning feedback performance matrix Λ - Based on Input Power

FIG.16

EP 4 137 376 A1

Europäisches
Patentamt

European
Patent Office

Office européen
des brevets

# EUROPEAN SEARCH REPORT

Application Number

EP 21 19 2429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/053554 A1 (SAKASHITA HIROKI [JP]) 25 February 2021 (2021-02-25) | 1-13,15 | INV. B60W20/10 |
| A | * paragraphs [0040] - [0071], [0079], [0082] * | 14 | B60W20/15 B60W20/16 B60W30/188 B60L15/20 B60W50/00 B60W10/06 B60W10/08 B60W10/26 |

-----

**TECHNICAL FIELDS
SEARCHED      (IPC)**

B60W
B60L

The present search report has been drawn up for all claims

| Place of search | Date of completion of the search | Examiner |
|---|---|---|
| Munich | 8 March 2022 | Vena, Gianpiero |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 2429

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2022

| Patent document cited in search report | | Publication date | Patent family member(s) | | Publication date |
|---|---|---|---|---|---|
| US 2021053554 | A1 | 25-02-2021 | CN | 111683849 A | 18-09-2020 |
| | | | EP | 3722167 A1 | 14-10-2020 |
| | | | JP | 2020011530 A | 23-01-2020 |
| | | | US | 2021053554 A1 | 25-02-2021 |
| | | | WO | 2020013251 A1 | 16-01-2020 |

EPO FORM P0459

For more details about this annex : see Official Journal of the European Patent Office, No. 12/82